Europäisches Patentamt

European Patent Office

Office européen des brevets

(11) Numéro de publication: **0 345 193**
**A1**

## (12) DEMANDE DE BREVET EUROPEEN

(21) Numéro de dépôt: 89480087.9

(22) Date de dépôt: 29.05.89

(51) Int. Cl.⁴: **B 65 G 15/08**
B 65 G 17/02

(30) Priorité: 30.05.88 FR 8807277

(43) Date de publication de la demande:
06.12.89 Bulletin 89/49

(84) Etats contractants désignés:
AT BE CH DE ES FR GB GR IT LI LU NL SE

(71) Demandeur: **ETUDES DE TRANSPORTS SARL**
**Espace Carros 1ère avenue**
**F-06510 Carros (FR)**

(72) Inventeur: **Croses, Alain**
**Immeuble La Roya Esc A Domaine du Loup**
**F-06800 Cagnes sur Mer (FR)**

(74) Mandataire: **Hautier, Jean-Louis**
**Cabinet Hautier Office Méditerranéen de Brevets**
**d'Invention et de Marques 24 rue Masséna**
**F-06000 Nice (FR)**

(54) **Transporteur à bande utilisant des câbles de matériaux composites faisant partie intégrante de la bande et dont le profil permet le maintien de la bande fermée.**

(57) L'invention a pour objet un transporteur à bande utilisant des câbles de matériaux composites, textiles polyesters ou autres faisant partie intégrante de la bande et dont le profil permet notamment le maintien de la bande fermée.

La bande d'enroulement (3) est complètement refermée sur elle-même, grâce aux profils de ses rebords (5, 6, 21, 22) qui peuvent recevoir des moyens de fermeture et d'accrochage ou faire office de moyens d'accrochage et de fermeture. Les bords ou rebords peuvent faire office de moyens d'accrochage et de fermeture grâce aux rebords qui comportent un ou plusieurs profils mâles et femelles qui coopèrent entre-eux. Chaque profil ou face supérieure du rebord comporte un demi-logement (24,25) qui permet de les assembler au moyen d'un insert d'assemblage (23) qui rient se loger dans le logement formé par les deux demi-logements lorsque la bande (3) est refermée sur elle-même et maintenue par le insert d'assemblage.

Ce type de transporteur à bande est destiné à transporter des produits solides ou pâteux.

Fig. 1

Fig. 7

## Description

## Transporteur à bande utilisant des câbles de matériaux composites faisant partie intégrante de la bande et dont le profil permet le maintien de la bande fermée.

L'invention a pour objet un transporteur à bande utilisant des câbles de matériaux composites, textiles, polyesters ou autres faisant partie intégrante de la bande et dont le profil permet notamment le maintien de la bande fermée.

Ce type de transporteur à bande est destiné à transporter des produits solides tels que minerai, tout venant, gravier, etc. ou pâteux tels que du béton, boue de papeterie, sur des distances variables, de très courtes (intérieur usine) à des distances très importantes, et dans ce cas la traversée des vallées ou de combes. De par sa grande capacité de survol, il intègre les accidents de terrain.

La présente invention concerne les transporteurs à bande et permet de véhiculer, de façon continue, des produits divers, quels que soient la distance, le débit, le profil de l'installation, ainsi que la densité et la nature des matériaux.

Dans les systèmes connus de ce genre, les bandes transporteuses sont constituées par des tapis sans fin armés, de longueurs différentes et reposant sur des rouleaux transversaux.

Ceux-ci sont répartis sur toute la longueur et suivant la charge, aussi bien dans la "zone de transport" que dans la partie retour de bande où leur espacement est différent.

Leurs extrémités comportent généralement d'un côté, un tambour "moteur" et de l'autre un tambour de renvoi, avec plusieurs dispositifs de tension possibles.

Les appareils ainsi conçus nécessitent des infrastructures importantes pour supporter les rouleaux, ce qui conduit, à un coût élevé, des installations.

Par ailleurs, dans le cas de passage au droit de terrains très accidentés et pour des distances importantes, il est impératif d'adapter des supports au profil de ces terrains.

Il en résulte une grande complexité d'implantation et de réalisation des éléments fixes.

Dans un autre mode de réalisation illustré par les documents US 1.530.707 et 2.925.903 la bande transporteuse est soutenue par des câbles et l'on prévoit des agrafes qui solidarisent de loin en loin la bande et les câbles.

Suivant une autre réalisation illustrée par le document US 3.326.354 les rebords de la bande sont directement surmoulés sur les câbles. Bien entendu, un tel agencement ne peut se réaliser que pour des bandes courtes. On sait que les câbles subissent des contraintes des torsion qui entraînent leur vrillage surtout si les portées sont longues. Ce vrillage se transmet, bien entendu, à la bande qui est déformée si bien qu'on peut assister à des décharges intempestives des produits transportés. Mais dans tous les cas, la bande est soumise à des efforts qui nuisent à sa longévité, malgré les articulations existant entre elle et les agrafes.

Enfin, il existe aussi des bandes transporteuses dont les bords sont suspendus à des crochets qui roulent dans des chemins de roulement. Cette disposition nécessite donc des superstructures coûteuses que les convoyeurs à câbles de suspension ont éliminées.

L'invention tend à éviter tous ces inconvénients et notamment le vrillage des câbles et la déformation de la bande.

A cet effet, le transporteur à bande utilise des câbles ou tresses de renforts constitués de câbles matériaux composites ou textiles ou polyesters faisant partie intégrante de la bande et qui font office de câbles. L'homogénéité des constituants évite que ces matériaux travaillent différemment aux variations de température ou de tension, donc qu'ils aient des mouvements relatifs amenant des usures ou des comportements anormaux de la bande.

Les matériaux composites faisant partie intégrante de la bande et qui font office de câbles sont des fibres non métalliques, non torsadées donc non vrillables, à très haute résistance à l'allongement. Ces fibres de renfort sont réparties au niveau des rebords de la bande.

Une autre caractéristique de la bande réside dans le profil des bords de la bande qui peut recevoir un moyen de fermeture et d'accrochage ou faire office de moyens d'accrochage et de fermeture. Ledit profil des rebords permet de refermer complètement la bande sur elle-même.

Le profil des bords peut recevoir des pistes magnétiques qui maintiennent la bande fermée. Le profil de chaque bord a un talon plan au niveau du profil supérieur de la bande ou profil intérieur (lorsque la bande est fermée).

Les bords ou rebords peuvent faire office de moyens d'accrochage et de fermeture grâce aux rebords qui comportent un ou plusieurs profils mâles et femelles qui coopèrent entre-eux.

Selon un autre mode de réalisation, le profil d'un des bords est un profil mâle et l'autre un profil femelle, l'assemblage des faces supérieures des bords de la bande assure le maintien de la bande fermée.

Selon un autre mode de réalisation, le profil d'un des bords peut comporter plusieurs profils mâles, et le profil du bord opposé correspondant peut comporter plusieurs profils femelles.

Selon un autre mode de réalisation, chaque face des bords supérieurs comporte un demi-logement qui permet de les assembler au moyen d'un insert d'assemblage qui vient se loger dans le logement formé par les deux demi-logements lorsque la bande est fermée et maintenue par ledit insert d'assemblage.

Selon une autre particularité du transporteur à bande, au moins un des tambours comporte des moyens élastiques permettant de tendre la bande en largeur lors de son passage sur ledit cylindre. Ledit tambour peut être composé d'au moins trois parties assemblées entre elles et dont les ressorts assurent leur écartement de manière à tendre la bande de roulement lors de son contact avec ledit tambour.

Selon un autre mode de réalisation, l'invention a pour objet des perfectionnements dans la fermeture et le verrouillage des rebords d'une bande transporteuse.

Actuellement, les bandes transporteuses telles que décrites dans le brevet FR-A-2.519.944 GIMAR, ne décrivent pas de moyens de fermeture. Dans la demande de brevet d'invention déposée le 7 mars 1988, FR.A. 8803009, les moyens de fermeture sont fondés sur le frottement.

La nécessité d'un moyen de verrouillage de la fermeture des rebords de la bande sans frottement et non de la fermeture par frottement, a permis à l'inventeur de travailler sur un nouveau moyen de fermeture par verrouillage.

Ledit moyen de fermeture par verrouillage assure, par ailleurs, une égalisation des tension, éventuellement différentes, entre les deuxbrins de la bande.

La fermeture, de par sa géométrie pure, son profil et sa cinématique, remplit les fonctions décrites et ce quelle que soit la nature du matériau de la bande.

Les fonctions de cette fermeture doivent être les suivantes :

1/ - Verrouillage de la bande

Du fait du poids des matériaux transportés et de la position des câbles, la bande a tendance à s'ouvrir :
- longitudinalement entre les galets,
- par rotation autour de l'axe du câble.

2/ - Egalisation des tensions

Les tensions entre les deux bords de la bande (cables acier ou renfort fibre) ne sont pas forcément égales (différence de longueur au montage, allongement différent dans le temps).

De manière à remplir ces différentes fonctions, les profils de chaque rebord de la bande transporteuse peuvent être dyssimétriques sur la face de chaque rebord destiné à être assemblé.

A cet effet, un des profils est un profil mâle et l'autre un profil femelle, il comporte des moyens pouvant autoriser le mouvement des bords de la bande et des moyens assurant le maintien des deux bords à la même hauteur, afin d'égaliser les efforts en maintenant les efforts horizontaux.

Le profil mâle est pourvu d'un tenon avec un retour dirigé vers le bas dans le plan médian et vertical de la bande et d'une mortaise adjacente au dit retour ; le profil femelle correspondant est pourvu d'une mortaise correspondant au tenon et d'un retour dirigé vers le haut dans la mortaise de l'autre profil, et d'une autre mortaise qui reçoit le retour du profil mâle.

La semelle de contact du profil femelle est taillée en biseau dans sa partie inférieure, de manière à reporter une partie de la charge d'un bord sur l'autre ; le biseau a son angle aigu en haut. Le mouvement de rotation d'un rebord de la bande par rapport à l'autre peut donc s'effectuer par le bas.

Selon un autre mode de réalisation, l'invention a pour objet un transporteur à bande utilisant un seul câble composite.

Le câble peut être réalisé en matériau composite indépendamment de la bande et faire office d'insert d'assemblage et de support, le profil des rebords de la bande assurant la fermeture et le maintien sur le câble.

Le maintien de la bande sur le câble est amélioré par des rainurages mâles et des rainurages femelles, sur les faces en opposition des rebords de ladite bande ; le profil du monocâble composite est celui d'un insert d'assemblage avec des pentes et des contre-pentes.

Les dessins ci-joints sont donnés à titre d'exemples indicatifs et non limitatifs. Ils représentent un mode de réalisation préféré selon l'invention. Ils permettront de comprendre aisément l'invention.

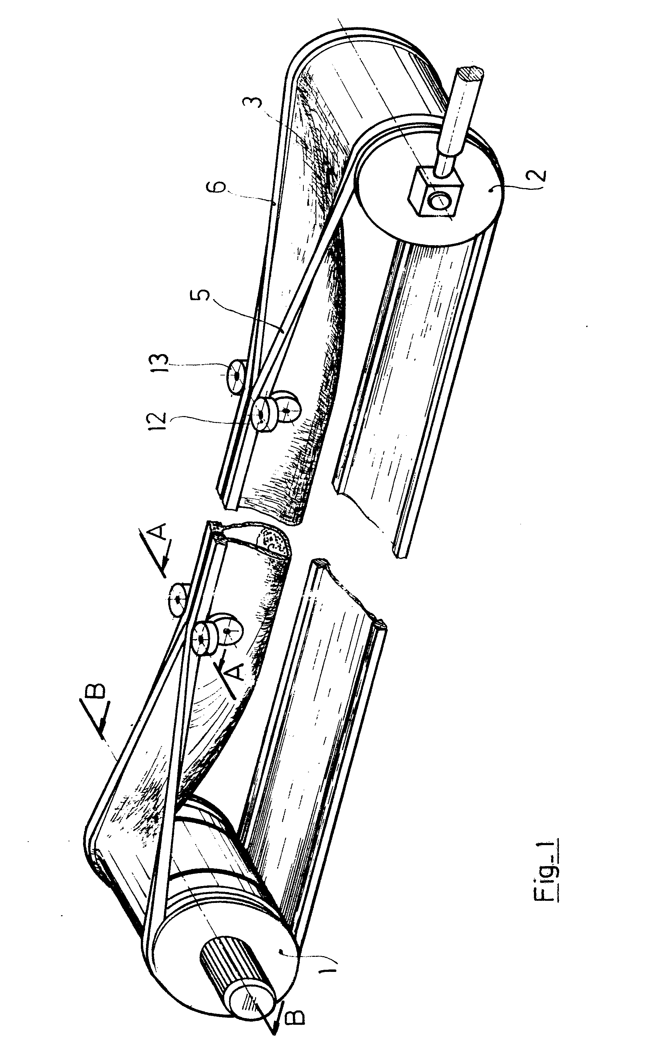

La figure 1 est une vue en perspective d'un transporteur à bande réalisé selon l'invention.

La figure 2 est une vue en coupe de la bande mettant en évidence la répartition des fibres en matériau composite.

La figure 3 est une vue en coupe selon l'axe A-A représenté à la figure 1, d'un transporteur à bande, avec sa bande fermée contenant le produit à transporter et ses galets.

La figure 4 est une vue en coupe selon l'axe B-B représenté à la figure 1, elle met en évidence un des tambours d'extrémité et ses moyens pour tendre la bande en largeur.

La figure 5 est une vue de rebords de la bande mettant en évidence le maintien de la bande fermée par des moyens magnétiques tels que des pistes magnétiques.

La figure 6 est une vue des rebords de la bande mettant en évidence l'assemblage et le maintien de la bande par un profil mâle et un profil femelle.

La figure 7 est une vue des rebords de la bande maintenue fermée par un insert d'assemblage.

La figure 8 est une vue schématique d'une bande transporteuse, mettant en évidence les forces qui s'exercent sur les rebords d'une bande transporteuse et qui imposent un verrouillage.

La figure 9 est une vue schématique du parallélogramme des forces.

La figure 10 permet de visualiser les forces tendant à ouvrir la banque transporteuse par un effort horizontal.

La figure 11 met en évidence de manière schématique les mouvements des rebords de la bande transporteuse que l'on utilise un câble en acier ou des matériaux composites.

Les figures 12 et 13 sont des vues schématiques permettant de visualiser les forces concernant les tensions entre les deux bords de la bande (câbles en acier ou renforts de fibres composites).

La figure 14 est une vue en coupe des rebords de la bande transporteuse en position fermée.

La figure 15 est une vue en coupe des rebords de la bande mettant en évidence les mouvements desdits bords.

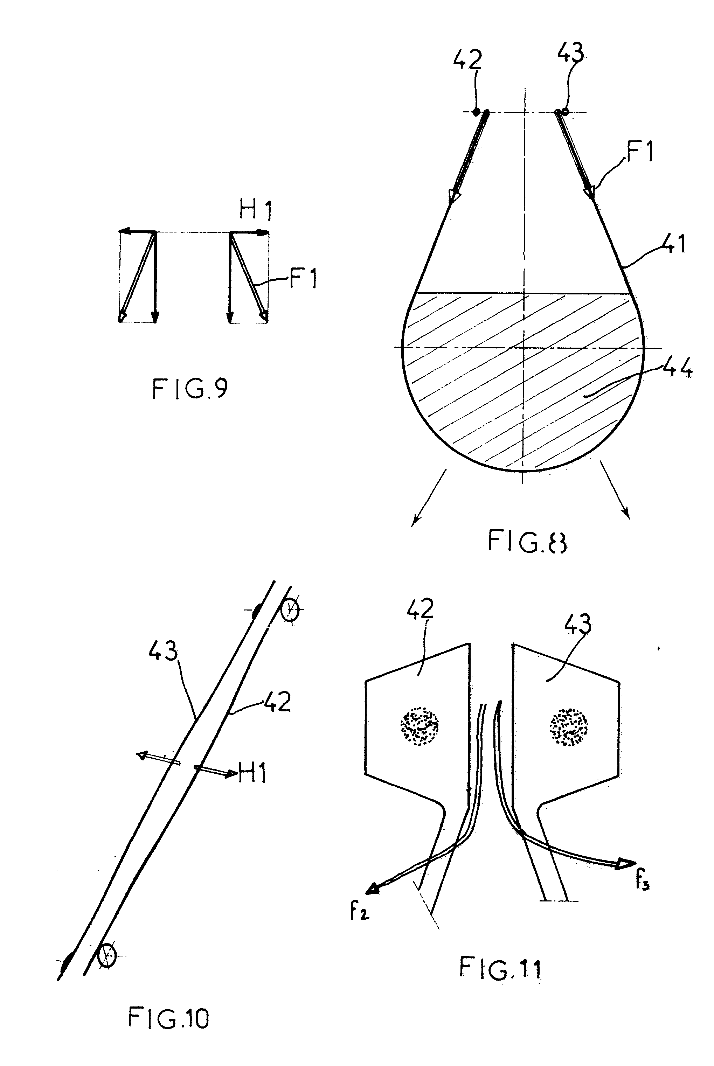

Dans la figure 8, la bande transporteuse est représentée schématiquement en coupe. Cette bande transporteuse est suspendue par ses rebords 42 et 43.

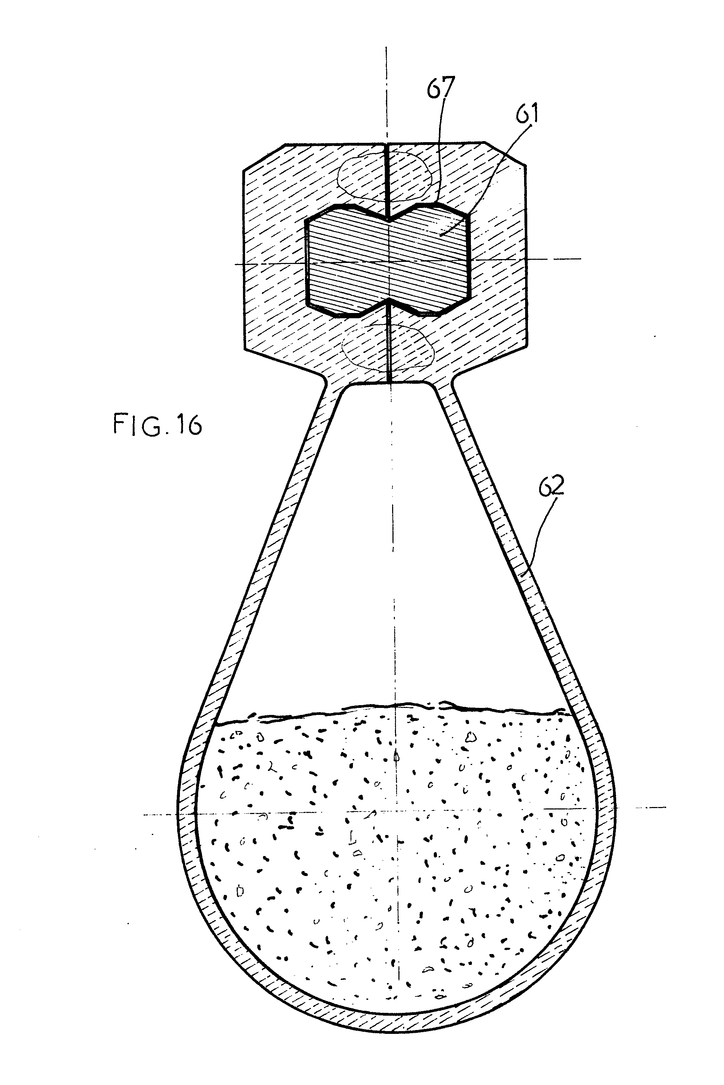

La figure 16 est une vue en coupe d'un transporteur à bande répondant aux mêmes fonctions (transport de matériaux dans une bande totalement fermée et se dégageant des contraintes de supports), mais avec un monocâble non plus métallique, mais composite et assurant, à la fois, les fonctions de support et de fermeture de la bande.

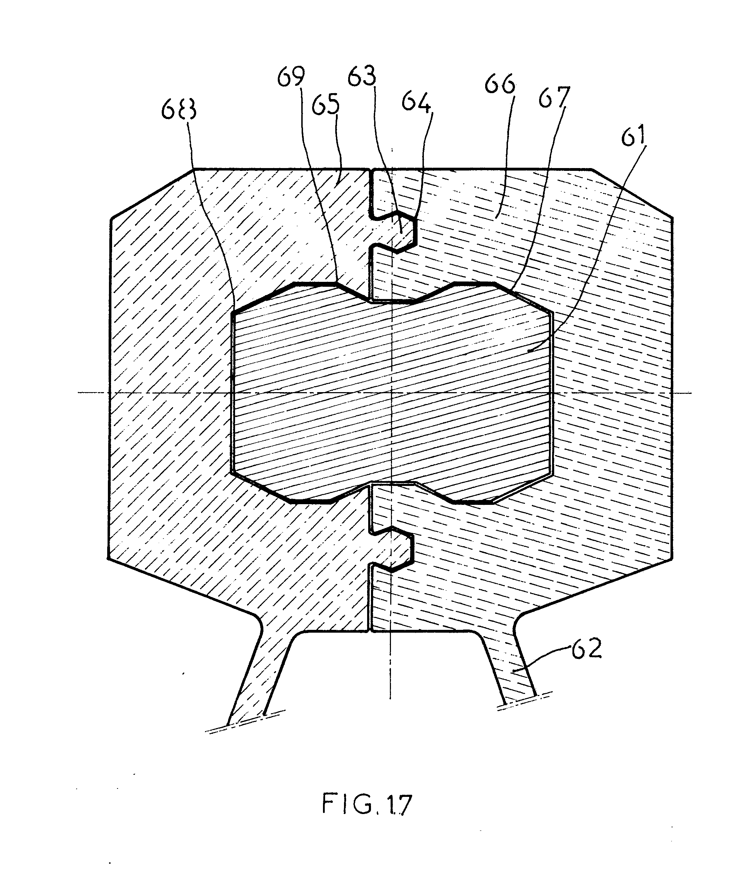

La figure 17 est une vue selon la figure 16, où le maintien de la bande sur le câble est amélioré par des rainurages mâles/femelles sur les faces en opposition des rebords de la bande.

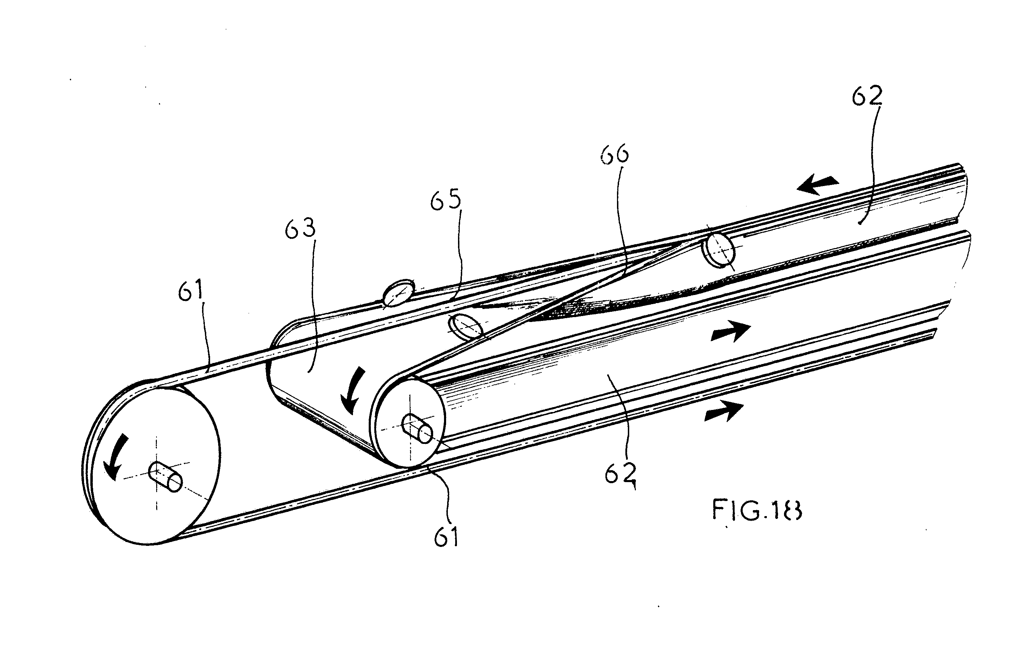

La figure 18 est une vue schématique du mécanisme d'ensemble du transporteur à bande mettant en évidence l'enroulement et le déroulement de la bande sur les tambours de renvoi et de tension ainsi que du profil de l'insert.

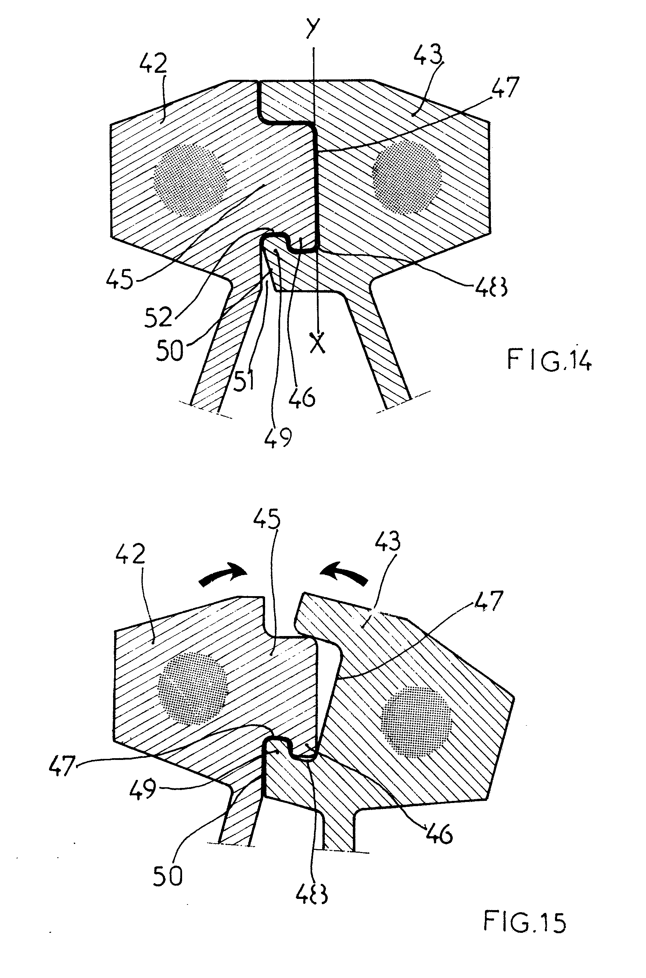

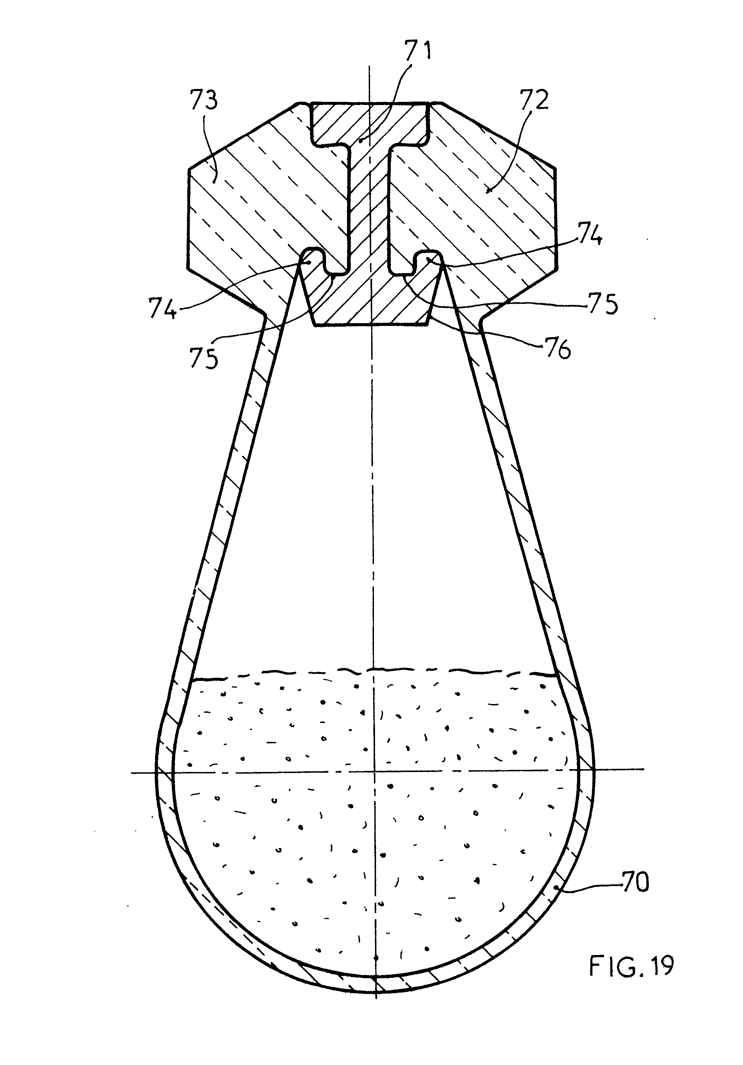

La figure 19 est une vue en coupe d'un transporteur à bande répondant aux mêmes fonctions (transport de matériaux dans une bande totalement fermée et se dégageant des contraintes de supports), mais où l'insert assure simultanément l'assemblage pour fermer la bande et le support de la bande. Dans ce mode de réalisation, l'insert reproduit les caractéristiques techniques décrites dans le mode de réalisation représenté dans les figures 14 et 15 où les fonctions support et fermeture étaient séparées. Les rebords assurant la fermeture de la bande, les câbles intégrés à la bande assurent la fonction de support.

Le transporteur à bandes est composé de deux tambours d'extrémités 1, 2 dont le premier 1 est moteur et entre lesquels est enroulée une bande transporteuse 3.

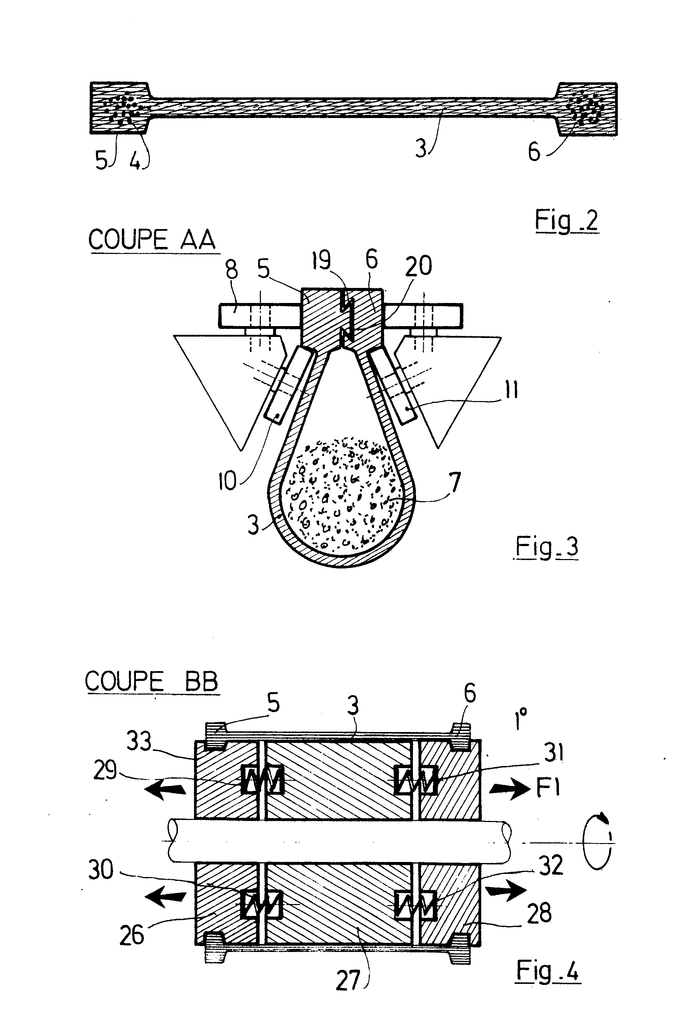

La bande transporteuse 3 est caractérisée par le fait qu'elle est composée de matériaux composites 4 faisant partie intégrante de la bande et qui font office de câbles. Ces matériaux sont des fibres non métalliques non torsadées, à très haute résistance à l'allongement. Comme représenté à la figure 2, les fibres 4 sont réparties selon l'axe longitudinal de la bande transporteuse 3 et sont concentrées uniquement sur les rebords de ladite bande. Au niveau de la partie restante de la bande 3, il n'y a pas de fibre de renfort.

La bande transporteuse 3 est chargée au niveau, par exemple du tambour 1, puis celle-ci est totalement refermée sur elle-même, c'est-à-dire que les rebords 5 et 6 sont rapprochés l'un de l'autre de manière à enserrer le produit 7 transporté, comme cela est représenté à la figure 3. A cet effet, des galets 8, 9, 10 et 11 agissent sur les rebords 5, 6 de la bande transporteuse 3 en vue de les rapprocher et de verrouiller la bande par les éléments mâles/femelles des rebords 5, 6. La bande transporteuse 3 reste fermée jusqu'au poste de déchargement.

Une fois que la bande transporteuse 3 est passée sur les derniers galets 12, 13, ladite bande transporteuse 3 reprend sa forme plate pour former le poste de déchargement au niveau du tambour 2.

Une caractéristique du transporteur à bande réside dans le profil des rebords 5, 6 qui peuvent recevoir un moyen de fermeture et d'accrochage ou faire office de moyens d'accrochage et de fermeture.

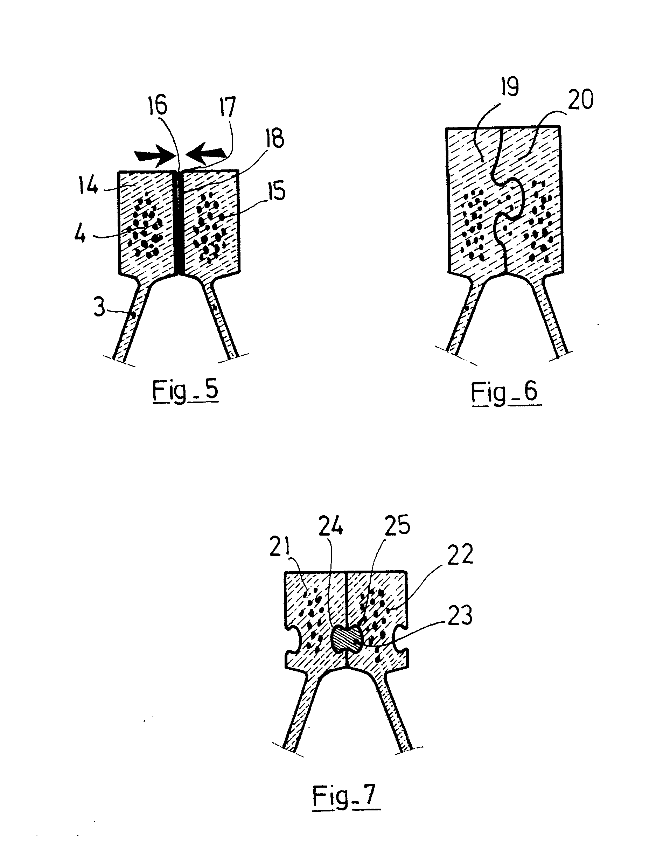

Dans la figure 5, les rebords 14, 15 peuvent recevoir des pistes magnétiques 16, 17 qui maintiennent la bande transporteuse 3 fermée. Le profil de chaque rebord ou bord a un talon 18 plan au niveau du profil supérieur de la bande 3 ou profil intérieur, lorsque la bande 3 est refermée sur elle-même.

Selon un autre mode de réalisation représenté aux figures 3 et 6, le profil d'un des rebords 19 est un profil mâle et l'autre profil 20 est un profil femelle. L'assemblage de ces deux profils 19, 20 assure le maintien de la bande transporteuse 3 refermée. Bien que non représenté sur les figures, il peut être possible qu'un rebord comporte plusieurs profils mâles et l'autre rebord opposé correspondant comporte plusieurs profils femelles.

Selon un autre mode de réalisation, représenté à la figure 7, chaque profil ou face supérieure du rebord 21, 22 comporte un demi-logement 24, 25 qui permet de les assembler au moyen d'un insert d'assemblage 23 qui vient se loger dans le logement formé par les deux demi-logements 24, 25 formés par les profils des rebords 21 et 22 lorsque la bande 3 est refermée sur elle-même et maintenue par ledit insert d'assemblage 23.

Une autre particularité du transporteur à bandes réside dans le fait qu'au moins un des tambours 1, 2 comporte des moyens élastiques permettant de tendre en largeur la bande 3 lors de son passage sur le cylindre dudit tambour 1, 2.

Selon le mode de réalisation représenté à la figure 4, le tambour 1 est formé de trois parties 26, 27 et 28. Une partie cylindrique centrale 27 et les joues 26 et 28 qui comportent une rainure 33 pour recevoir le profil des rebords 5 et 6 de la bande 3.

Des ressorts 29, 30 sont disposés entre la joue 26 et la partie centrale 27 et d'autres ressorts 31, 32 sont disposés dans des logements entre ladite partie centrale 27 et la joue 28. Ces ressorts 29, 30, 31, 32 tendent à augmenter la largeur du tambour 1 et ce, de manière à tendre en largeur la bande 3, voir les flèches F1.

Dans le mode de réalisation représenté dans les figures 8 à 15, le produit transporté est représenté en 44. Par son poids, il provoque les forces de réaction F1 et H1, forces horizontales. Les forces horizontales H1 sont également représentées à la figure 10, dans une vue en plan mettant en évidence le danger d'écartement entre les rebords 42 et 43 de la bande 1, et ce particulièrement entre deux galets.

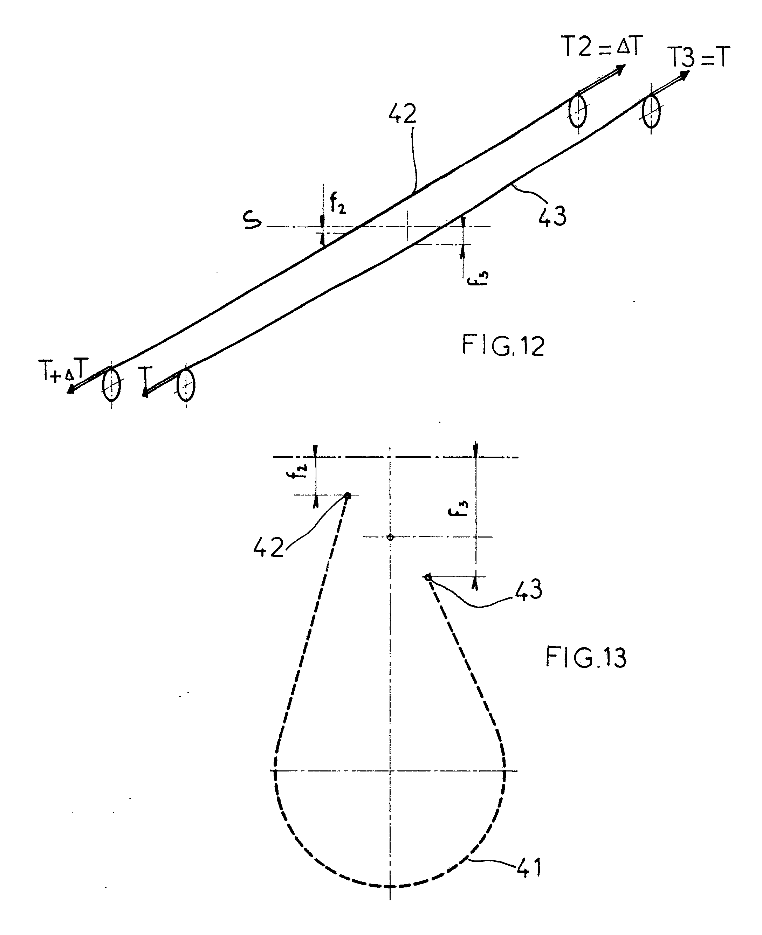

La figure 11 met en évidence l'ouverture de la bande par rotation, telle que représentée par les flèches f2 et f3.

Les figures 12 et 13 mettent en évidence les problèmes qui peuvent survenir au niveau de la tension entre les deux rebords 42 et 43 de la bande 41. Le brin ou rebord 42 a une tension telle que : $T2 = T + \Delta T$ $T3 = T$, tension exercée sur le brin 43. On a donc une flèche $f2 < f3$.

Comme représenté sur la figure 13, il se produit alors une rotation qui provoque l'ouverture de la bande 41 au niveau de ses rebords.

Dans les figures 14 et 15, il est mis en évidence la dissymétrie qui existe entre les deux rebords : le rebord 42, rebord mâle, et le rebord 43, rebord femelle.

Ces rebords comportent des moyens pouvant autoriser le mouvement des rebords 42 et 43 de la bande 41 et des moyens assurant le maintien des deux rebords 42 et 43, à la même hauteur, afin d'égaliser les efforts en maintenant les efforts horizontaux.

Le profil mâle du rebord 42 est pourvu d'un tenon 45 avec un retour 46 dirigé vers le bas dans le plan médian et vertical X-Y de la bande 41. Le profil mâle du rebord 42 est également pourvu d'une mortaise adjacente 52 audit retour 46, ladite mortaise 52 et le retour 46 assurant le verrouillage en coopérant avec le profil femelle de l'autre rebord 43.

Le profil femelle du rebord 43 correspondant est pourvu d'une mortaise 48 qui reçoit le tenon du profil mâle du rebord 42. Cette mortaise 48 est pourvue d'un retour 49, dirigé vers le haut dans la mortaise 47 de l'autre profil mâle du rebord 42.

Il est également pourvu d'une mortaise adjacente 48 qui reçoit le retour 46 du profil mâle du rebord 42.

La semelle de contact 50 du profil femelle du rebord 43 est taillée en biseau dans sa partie inférieure, de manière à permettre un mouvement en rotation des rebords 42 et 43 de la bande 41.

Le biseau 51 a son angle aigü en haut.

Le mouvement de rotation d'un rebord 42 ou 43 de la bande 41 par rapport à l'autre rebord peut donc s'effectuer par le bas. Ce mouvement avec un léger jeu permet sans usure l' ouverture de la bande.

Dans les figures 16, 17, 18, le transporteur à bande utilise un monocâble qui n'est plus métallique, mais composite.

Le câble composite 61 remplit, à la fois la fonction support et fermeture de la bande. Le câble composite 61 peut avoir un profil en coupe qui assure la fonction d'insert d'assemblage.

Dans le cas de charges élevées, le maintien de la bande 62 est renforcé par des rainurages mâles 63, femelles 64 sur les faces en opposition des rebords 65, 66 de la bande 62.

Le câble composite 61 est indépendant de la bande 62, il peut donc être entraîné mécaniquement dans d'excellentes conditions et il permet d'assurer de par son profil 67, la fermeture de la bande 62. A cet effet, le profil 67 du câble composite 61 a un profil d'insert d'assemblage, c'est-à-dire avec des pentes 68 contre-pentes 69.

Comme représenté sur la figure 18, le câble 61 est séparé de la bande à chaque extrémité et vient s'enrouler sur les poulies motrices et de retour ; la bande 62, elle, s'enroule simplement sur les tambours de renvoi et de tension.

Dans la figure 19, la bande 70 est pourvue d'un insert d'assemblage 71 qui assure les fonctions de support de la bande 70 et de moyen d'assemblage des deux bords 72 et 73 de ladite bande 70. Ledit insert 71 a un profil tel qu'il comporte des moyens pouvant autoriser le mouvement des rebords ou bords 72, 73 par un léger jeu qui permet sans usure l'ouverture de la bande 70 et des moyens assurant le maintien des deux bords 72, 73 à la même hauteur, afin d'égaliser les efforts en maintenant les efforts longitudinaux. A cet effet, l'insert présente sur chaque face en contact avec les deux bords 72, 73 de la bande 70, un profil avec tenon 74 et mortaise 75 correspondant au profil de chaque bord 72, 73. La semelle 76 dudit insert 71 est taillée en biseau dans sa partie inférieure, de manière à autoriser un mouvement en rotation des bords 72, 73. Ledit mouvement s'effectue grâce à ce léger jeu qui permet sans usure l'ouverture de la bande. Ledit biseau a son angle aiguë en haut.

## REFERENCES

1. Tambour
2. Tambour
3. Bande transporteuse
4. Fibres non métalliques
5. Rebord de la bande
6. Rebord de la bande
7. Produit
8. Galet
9. Galet
10. Galet
11. Galet
12. Galet
13. Galet
14. Rebord
15. Rebord
16. Piste magnétique
17. Piste magnetique
18. Talon plan
19. Profil mâle
20. Profil femelle
21. Rebord
22. Rebord
23. Insert d'assemblage
24. Demi-logement
25. Demi-logement
26. Joue
27. Partie cylindrique
28. Joue
29. Ressort
30. Ressort
31. Ressort
32. Ressort
33. Rainure
F1. Flèche
41. Bande transporteuse
42. Rebord de bande transporteuse
43. Rebord de bande transporteuse
44. Produit transporté
45. Tenon du profilé mâle du rebord 42
46. Retour dirigé vers le bas
47. Mortaise du profilé du profilé mâle du rebord 42
48. Mortaise adjacente
49. Retour
50. Semelle de contact du profil femelle du rebord 43
51. Biseau
52. Mortaise adjacente au retour 46 du profil mâle du rebord 42

F1 Force d'ouverture (rotation)

H1 Force d'ouverture (translation)

f2, f3 Flèches

61. Câble composite

62. Bande

63. Rainurage mâle

64. Rainurage femelle

65. Rebord de la bande

66. Rebord de la bande

67. Profil du câble composite

68. Pente

69. Contre-pente

70. Bande

71. Insert d'assemblage

72. Bord

73. Bord

74. Tenon

75. Mortaise

76. Semelle

**Revendications**

1. Transporteur à bande du type comprenant essentiellement deux tambours d'extémité (1, 2) et entre lesquels (1, 2) est enroulée une bande transporteuse (3) complètement refermée sur elle-même, grâce aux profils de ses rebords (5, 6) qui peuvent recevoir des moyens de fermeture et d'accrochage (16, 23) ou faire office de moyens d'accrochage et de fermeture (19, 20) caractérisé par le fait

que chaque profil ou face supérieure du rebord (21, 22) comporte un demi-logement (24, 25) qui permet de les assembler au moyen d'un insert d'assemblage (23) qui vient se loger dans le logement formé par les deux demi-logements (24, 25) formés par les profils des rebords (21) et (22) lorsque la bande (3) est refermée sur elle-même et maintenue par ledit insert d'assemblage (23).

2. Transporteur selon la revendication 1 caractérisé par le fait

qu'au moins un des tambours (1, 2) comporte des moyens élastiques permettant de tendre en largeur la bande (3) lors de son passage sur le cylindre dudit tambour (1, 2).

3. Transporteur selon la revendication 1 caractérisé par le fait

que le tambour (1) est formé de trois parties (26, 27 et 28) ; une partie cylindrique centrale (27) et les joues (26 et 28) qui comportent une rainure (33) pour recevoir le profil des rebords (5 et 6) de la bande (3) ; des ressorts (29, 30) sont disposés entre la joue (26) et la partie centrale (27) et d'autres ressorts (31, 32) sont disposés dans des logements entre ladite partie centrale (27) et la joue (28) ; ces ressorts (29, 30, 31, 32) tendent à augmenter la largeur du tambour (1) et ce, de manière à tendre en largeur la bande (3).

4. Transporteur selon la revendication 1 caractérisé par le fait

que la bande transporteuse (3) est composée de matériaux composites (4) faisant partie intégrante de la bande et qui font office de câbles.

5. Transporteur selon la revendication 1 caractérisé par le fait

que ces matériaux sont des fibres non métalliques, non torsadées donc non vrillables à très haute résistance à l'allongement.

6. Transporteur selon l'une quelconque des revendications 1, 4 ou 5 caractérisé par le fait

que les fibres (4) sont réparties selon l'axe longitudinal de la bande transporteuse (3) et sont concentrées uniquement sur les rebords de ladite bande.

7. Transporteur selon l'une quelconque des revendications 1, 4, 5 ou 6 caractérisé par le fait

qu'au niveau de la partie restante de la bande (3), il n'y a pas de fibre de renfort.

8. Transporteur à bande du type comportant essentiellement deux tambours d'extrémité et entre lesquels est enroulée une bande transporteuse (41), la bande d'enroulement transporteuse (41) est complètement refermée sur elle-même, grâce au profil de ses rebords (42, 43) qui peuvent recevoir des moyens de fermeture et d'accrochage ou faire eux-mêmes office de moyen d'accrochage et de fermeture, il comporte des moyens de verrouillage (45, 47) de la bande de manière à éviter toute tendance à s'ouvrir longitudinalement entre les galets et par rotation autour de l'axe du câble ou des fibres caractérisé par le fait

qu'il comporte des moyens de transfert des charges permettant l'égalisation des tension (50, 51) reportant une partie de la charge d'un bord sur l'autre.

9. Transporteur à bande selon la revendication 8 caractérisé par le fait

que les moyens d'égalisation des tensions consistent en ce que les profils de chaque rebord (42, 43) de la bande transporteuse sont dissymétriques sur la face de chaque rebord destiné à être assemblé et qu'il comporte un moyen autorisant des mouvements de rotation d'un rebord (42 ou 43) par rapport à l'autre.

10. Transporteur à bande selon la revendication 9, caractérisé par le fait

que le moyen autorisant des mouvements de rotation d'un rebord (42 ou 43) par rapport à l'autre réside dans la dissymétrie du profil et par la présence, au niveau de la semelle de contact (50), d'un moyen faisant office de biseau (51) taillé dans la partie inférieure d'un des deux profils (42 ou 43), de manière à permettre un mouvement de rotation des rebords de la bande (41).

11. Transporteur à bande selon la revendication 10 caractérisé par le fait

que le biseau (51) a son angle aigu en haut.

12. Transporteur à bande dont la bande est complètement refermée sur elle-même grâce, notamment, aux profils de ses rebords, ledit transporteur à bande est du type où le monocâble (61) est en matériau composite, le maintien de la bande (62) sur le câble (61) est amélioré par des rainurages mâles (63) et des rainurages femelles (64), sur les faces en opposition des rebords (65, 66) de ladite bande (62) caractérisé par le fait

que le profil (67) du monocâble composite (61) est celui d'un insert qui assure la fonction d'insert d'assemblage avec des pentes (68) et des contre-pentes (69).

13. Transporteur à bande selon la revendication 8 caractérisé par le fait

que la bande (70) est pourvue d'un insert d'assemblage (71) qui assure les fonctions de support de la bande (70) et de moyen d'assemblage des deux bords (72) et (73) de ladite bande (70) ; ledit insert (71) a un profil tel qu'il comporte des moyens pouvant autoriser le mouvement des rebords ou bords (72), (73) par un léger jeu qui permet sans usure l'ouverture de la bande (70) et des moyens assurant le maintien des deux bords (72), (73) à la même hauteur, afin d'égaliser les efforts en maintenant les efforts longitudinaux.

14. Transporteur à bande selon la revendication 13 caractérisé par le fait

que l'insert présente sur chaque face en contact avec les deux bords (72), (73) de la bande (70) un profil avec tenon (74) et mortaise (75) correspondant au profil de chaque bord (72), (73) ; la semelle (76) dudit insert (71) est taillée en biseau dans sa partie inférieure, de manière à autoriser un mouvement en rotation des bords (72), (73).

Fig_1

Fig .2

COUPE AA

Fig .3

COUPE BB

Fig .4

Fig_5

Fig_6

Fig_7

FIG.9

FIG.8

FIG.10

FIG.11

FIG.12

FIG.13

FIG.14

FIG.15

FIG.16

FIG. 17

FIG.18

EP 0 345 193 A1

FIG.19

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 228 937 (H. FELDMANN) * revendications 1,8; figures 1,2,9 * | 1,6-8 | B 65 G 15/08 B 65 G 17/02 |
| A | DD-A- 9 262 (W. SCHAEFFER) * page 3, lignes 96-104; page 4, lignes 16-18; figures 3,4,6 * | 1 | |
| A | DE-C- 972 031 (W. SCHAEFFER) * page 2, lignes 65-70; figures 2,3 * | 1,12 | |
| A | DE-A-1 929 644 (A. CREMONA) * page 3, lignes 2-14; figures 1,3 * | 2,3 | |
| A | FR-A- 827 538 (L. KRIEGER) * page 2, lignes 68-78; figures 6,7 * | 3 | |
| A | DE-A-3 011 929 (INDUSTRIE PIRELLI S.P.A.) * page 6, lignes 4-22 * | 4 | |
| A | DE-C- 880 112 (CASSELLA FARBWERKE MAINKUR) * page 2, lignes 51-58 * | 5 | DOMAINES TECHNIQUES RECHERCHES (Int. Cl.4) B 65 G 15/00 B 65 G 17/00 |
| A | GB-A-1 351 132 (BTR INDUSTRIES LTD.) * page 3, lignes 29-43; figures 4A-4C * | 8 | |
| A | EP-A-0 084 511 (GIMAR S.A.) * figure 1 *; & FR - A - 2519944 (Cat. D,A) | 1,8 | |

Le présent rapport a été établi pour toutes les revendications

| Lieu de la recherche | Date d'achèvement de la recherche | Examinateur |
|---|---|---|
| BERLIN | 11-08-1989 | SIMON J J P |